# EUROPÄISCHE PATENTSCHRIFT

(11) **EP 2 176 363 B1**
(45) Veröffentlichungstag und Bekanntmachung des Hinweises auf die Patenterteilung: **24.10.2012**
(21) Anmeldenummer: 08773750.8
(22) Anmeldetag: 28.06.2008
(51) Int. Cl.: C09C 1/40, C01B 25/36, C09C 1/00

(54) **ALUMINIUMPHOSPHAT DIHYDRAT ALS WEISSPIGMENT IN ANSTRICHMITTELN**
ALUMINIUM PHOSPHATE DIHYDRATE AS WHITE PIGMENT IN PAINTS
DIHYDRATE DE PHOSPHATE D'ALUMINIUM EN TANT QUE PIGMENT BLANC DANS DES PEINTURES

(30) Priorität: 10.07.2007 DE 102007031960
(43) Veröffentlichungstag der Anmeldung: 21.04.2010
(73) Patentinhaber: BK Giulini GmbH, 67065 Ludwigshafen (DE)
(72) Erfinder: THAUERN, Henrike, 68165 Mannheim (DE); SCHMITT, Michael, 69124 Heidelberg (DE); STAFFEL, Thomas, 67269 Grünstadt (DE)
(86) Internationale Anmeldenummer: PCT/EP2008/005307
(87) Internationale Veröffentlichungsnummer: WO 2009/007030

(56) Entgegenhaltungen:
- EP-A- 1 860 159
- WO-A-2006/024959
- J. GOMEZ MORALES,R. RODRIGUEZ CLEMENTE AND E. MATIJEVIC: "The Mechanism of Precipitation of Colloidal Variscite (ALP04.2H20) Particles" J. COLLOID AND INTERFACE SCI., Bd. 151, Nr. 2, 1992, Seiten 555-562, XP002507145
- BEPPU M M ET AL: "Self-opacifying aluminum phosphate particles for paint film pigmentation" JCT. JOURNAL OF COATINGS TECHNOLOGY, PHILADELPHIA, PA, US, Bd. 69, Nr. 867, 1. April 1997 (1997-04-01), Seiten 81-88, XP009061770 ISSN: 0361-8773

## Beschreibung

Die vorliegende Erfindung betrifft die Verwendung von Aluminiumorthophosphat Dihydrat als Weißpigment mit Korrosionsschutz Eigenschaften in Farben, Lacken etc., sowie ein Verfahren zu ihrer Herstellung.

Weißpigmente sind in großer Zahl bekannt. Sie sollen als Bestandteil von Farben, Lacken und anderen Anstrichmitteln eine Abdeckung des behandelten, andersfarbigen Untergrundes mit möglicht hohem Weißgrad bewirken. Selbstverständlich müssen sie dabei mit den übrigen Komponenten des Anstrichmittels kompatibel sein. Zu den bevorzugten Weißpigmenten gehört Titandioxid, das nicht nur als Pulver sondern auch in den Anstrichmitten einen außerordentlich hohen Weißgrad aufweist. Es ist jedoch in der Herstellung bei entsprechender Reinheit auch sehr teuer, so dass versucht wurde es durch andere Weißpigmente oder Füllstoffe ganz oder teilweise zu ersetzen. Häufig verwendet werden z.B. Calciumcarbonat (Kalk), Calciumsulfat (Gips), Aluminiumsilicat (Tonerde, Kaolin), Magnesiumsilicat (Talkum), Aluminiumoxid, Zinkoxid. Da alle diese Produkte jedoch das Deckvermögen von Titandioxid nicht erreichen müssen sie in größeren Mengen als Titandioxid eingesetzt werden, was die Abriebfestigkeit verringert und was zu einem erhöhten Bindemittel bedarf führt. In hochwertigen Anstrichmitteln wird daher immer Titandioxid verwendet.

Aus der WO 2006/024959 A2 ist bekannt, dass amorphes Aluminiumphosphat, das auf Grund einer speziellen Herstellungsweise Luftporen einschließt, als Weißpigment in Anstrichmitten, insbesondere zusammen mit Titandioxid, verwendet werden kann. Da dieses Produkt jedoch auf Grund der amorphen Struktur sehr hohe Ölzahlen aufweist und damit viel Lösemittel der Anstrichmittel bindet, sind solche Anstrichmittel, außer bei Verwendung kleiner Pigmentmengen, nicht lagerstabil, da sie stark nachdicken. Der hohe Bindemittelverbrauch führt zusätzlich zu einer Verringerung der Abriebfestigkeit.

Aus der DE 10 2006 024864.4 A1 ist weiterhin bekannt, dass ein Gemisch aus amorphem Aluminiumphosphat und kristallinem wasserfreien Aluminiumphosphat (Berlinit) als Korrosionsschutzmittel in Anstrichmitten für Metalloberflächen eingesetzt werden kann. Auch diese Mittel sind wegen der hohen Ölzahl als Weißpigment nicht in genügender Menge einsetzbar.

In J. Gomez Morales, R. Rodriguez Clemente, E. Matijevic, J. Colloid and Interface Sci. 1992, 151 (2), 555 -562 werden kristalline Variscit -Partikel und ihre Herstellung offenbart. M.M. Beppu et.al., J. Coat. Technol. 1997, 69, 81 -67 offenbart die Verwendung von amorphen Aluminiumphosphaten als Füllstoffe und Ersatz von Titandioxid als Weisspigment. EP1860159 offenbart die Herstellung von Berlinit, einem wasserfreien Aluminiumorthophosphat.

Es besteht daher weiterhin Bedarf an brauchbaren Weißpigmenten und die Aufgabe entsprechende Pigmente bereitzustellen.

Überraschend wurde nun gefunden, dass Aluminiumorthophosphat als Dihydrat nicht nur als Pulver sondern auch in Anstrichmitteln einen sehr hohen Weißgrad aufweist, der fast den des Titandioxids erreicht. Auf Grund der kristallinen Struktur und der daraus folgenden geringen Ölzahl wird ein geringerer Löse- und Bindemittelbedarf erreicht, so dass die Anstrichmitten nicht verdicken und auch eine höhere Abriebfestigkeit aufweisen. In Kombination mit Titandioxid werden diese Eigenschaften noch weiter verbessert.

Die obige Aufgabe wird somit gelöst durch ein Weißpigment aus kristallinem Aluminiumorthophosphat Dihydrat.

Aluminiumorthophosphat Dihydrat ist eine bekannte Verbindung, die in der Natur z.B. als Variscit vorkommt.

Die Herstellung der erfindungsgemäßen Pigmente erfolgt in an sich bekannter Weise durch Umsetzung von Aluminiumverbindungen mit Phosphorsäure oder Phosphaten in wässriger Lösung bei erhöhten Temperaturen, insbesondere von 80-120°C, wobei das schwerlösliche Aluminiumorthophosphat als kristallines Dihydrat ausfällt bzw. sich aus dem zunächst ausfallendem amorphen Produkt durch Rekristallisation bindet und abgetrennt wird. Beispielsweise kann Aluminiumhydroxid mit Phosphorsäure oder Aluminiumsulfat mit Natriumphosphat umgesetzt werden. Anschließend erfolgt eine Trocknung und Gewünschtenfalls eine Mahlung auf die benötigte Korngröße.

Sofern die Korngröße des erhaltenen Aluminiumorthophosphat nicht schon fein genug ist, schließt sich eine Mahlung bzw. Sichtung oder Siebung an. Vorzugsweise sollte die Korngröße im Bereich von D₅₀ 1 - 15 µm und D₉₀ 1 - 30 µm haben, wobei D₉₀ oberhalb von D₅₀ liegt. Insbesondere sollte D₅₀ = 10 µm und D₉₀ = 15 µm sein. Es ist weiter bevorzugt wenn maximal etwa 0,01 % Kornanteil mit einer Größe von über 32 µm vorliegt.

Das Schüttgewicht liegt vorzugsweise im Bereich von 300 bis 1000 g/l, insbesondere im Bereich von 500 bis 900 g/l.

Das erfindungsgemäße Weißpigment Aluminiumorthophosphat Dihydrat eignet sich zum Ersatz von Titandioxid in Anstrichmitteln und kann sowohl in Grundierungen als auch in Deckfarben zum Einsatz kommen. Es besitzt neben der Eignung als Weißpigment auch eine gute Korrosionsschutzwirkung und kann daher auch als Korrosionsschutzmittel bei metallischen Untergründen eingesetzt werden. Zu den Anstrichmitteln, für die Aluminiumorthophosphat Dihydrat brauchbar ist, zählen Farben auf Wasser- und Lösemittelbasis, Lacke auf Wasser - und Lösemittelbasis sowie Lasuren.

Die Formulierung von solchen Anstrichmitteln ist dem Fachmann an sich bekannt. Sie enthalten üblicherweise Wasser oder ein organisches Lösemittel als Fluid, ein Bindemittel in Form nichtflüchtiger Kunstharze, Zusatzstoffe zur Regelung des Fließverhaltens, der Abbindung, Lichtschutzmittel, Konservierungsmittel, Entschäumer etc., sowie Pigmente zur Einstellung der gewünschten Färbung. Die konkreten Rezepturen richten sich unter anderem nach dem zu beschichtenden Untergrund, der Art des Anstrichmittels, der vorgesehenen Applikationsweise etc. Aus Umweltschutzgründen und wegen der Feuergefährlichkeit organischer Lösungsmittel werden heute wässrige Kunstharzdispersionen als Anstrichmittelgrundlage bevorzugt. Zur Offenbarung weiterer Einzelheiten wird auf die umfangreiche Beschreibung in der obigen WO2006/024959A2 verwiesen.

Aluminiumorthophosphat Dihydrat ist mit den üblicherweise in Anstrichmitteln enthaltenen Bestandteilen gut verträglich. Typischerweise werden etwa 5 bis 20 Gew.-% Aluminiumorthophosphat Dihydrat in die Anstrichmittel eingearbeitet. Sofern jedoch vor der Applikation eine Verdünnung vorgesehen ist, können ggfs. auch höhere Anteile zum Einsatz kommen.

Die folgenden Beispiele sollen die Erfindung weiter veranschaulichen, ohne sie jedoch auf die konkret beschriebenen Ausführungsformen zu beschränken. Alle. %-Angaben beziehen sich, soweit nicht anders angegeben, auf das Gewicht.

### Beispiel 1: Herstellung von Aluminiumorthophosphat Dihydrat

Phosphorsäure (583 g 84%ig, 5,0 mol) wird in 1600 ml Wasser vorgelegt und auf ca. 110°C erwärmt, danach wird unter Rühren Aluminiumhydroxid (410 g, Feuchthydrat mit 5 % Wasser, 5,0 mol) Portionsweise zugegeben und jeweils gewartet bis alles gelöst ist, wobei sich das Reaktionsgemisch auf ca. 120°C erwärmt. Dann wird auf Raumtemperatur abgekühlt und der ausgefallene kristalline Feststoff über ein Papierfilter (S&S Nr.604 Ø =110mm) abgesaugt, mit 65 ml Wasser gewaschen und über Nacht bei 110°C getrocknet.
Ausbeute 929 g, entsprechend 96,3 %.
Das Produkt weist im Pulverdiffraktogramm die für das Dihydrat typischen Reflexe bei 37, 39, 42° und 66° (4-Theta Skala) auf.

### Beispiel 2: Herstellung der Anstrichmitten

Zur Herstellung von Vergleichsrezepturen werden bekannte Rezepturen durch teilweisen oder völligen Ersatz des Titandioxids durch das erfindungsgemäße Aluminiumorthophosphat Dihydrat bzw. das bekannte amorphe AP modifiziert.

### 1) Innenfarbe Standartrezeptur (Teilersatz des TiO₂)

| **Menge in g** | **Substanz** |
|---|---|
| 267,5 | Wasser |
| 1,0 | Phosphat Dispergiermittel |
| 3,0 | Celluloseether |
| 1,0 | KOH |
| 1,5 | Acrylat Dispergiermittel |
| 130,0 | natürliches CaCO₃ (5µm) |
| 80,0 | Pigment |
| 110,0 | Vinylacetat Dispersion |
| 200,0 | natürliches CaCO₃ (2,5µm) |
| 80,0 | gefälltes CaCO₃ (0,3µm) |
| 50,0 | natürliches CaCO₃ (5µm) |
| 50,0 | Talkum |
| 40,0 | Kaolin |
| 1,0 | PU Verdicker |
| 2,0 | Konservierungsmittel |
| 3,0 | Entschäumer |
| | |
| ∑ 1000 | |

1a) Pigment Titandioxid 80g
1b) Pigment Titandioxid 40g, Aluminiumorthophosphat Dihydrat 20g
1c) Pigment Titandioxid 40g , Aluminiumphosphat amorph 10g
1d) Pigment Titandioxid 40g , Aluminiumphosphat amorph 20g

### 1) Innenfarbe Standartrezeptur (Ersatz des TiO₂)

| **Menge in g** | **Substanz** |
|---|---|
| 266,0 | Wasser |
| 1,0 | Phosphat Dispergiermittel |

| | |
|---|---|
| 3,0 | Celluloseether |
| 1,0 | KOH |
| 3,0 | Acrylat Dispergiermittel |
| 1,0 | Entschäumer |
| 150,0 | natürliches CaCO₃ (5µm) |
| 60,0 | Pigment |
| 110,0 | Vinylacetat Dispersion |
| 200,0 | natürliches CaCO₃ (2,5µm) |
| 60,0 | gefälltes CaCO₃ (0,3µm) |
| 50,0 | natürliches CaCO₃ (5µm) |
| 50,0 | Talkum |
| 40,0 | Kaolin |
| 1,0 | PU Verdicker |
| 2,0 | Konservierungsmittel |
| 2,0 | Entschäumer |
| | |
| ∑ 1000 | |

1e) Pigment Titandioxid 60g
1f) Pigment Aluminiumorthophosphat Dihydrat 60g
1g) Pigment Aluminiumorthophosphat amorph 60g

### 2) Siliconharzfarbe Standartrezeptur

| **Menge in g** | **Substanz** |
|---|---|
| 250,0 | Wasser |
| 1,0 | Phosphat Dispergiermittel |
| 3,0 | Celluloseether |
| 1,0 | KOH |
| 3,0 | Acrylat Dispergiermittel |
| 1,0 | Entschäumer |
| 120,0 | Pigment |
| 80,0 | Talkum |
| 80,0 | Kaolin |
| 100,0 | natürliches CaCO₃ (2,5µm) |
| 100,0 | natürliches CaCO₃ (5µm) |
| 130,0 | Styrolacrylat Dispersion |
| 6,0 | Testbenzin |
| 110,0 | Siliconharz Dispersion |
| 10,0 | Hydrophobierungsmittel |
| 2,0 | Topfkonservierungsmittel |
| 7,0 | Filmkonservierungsmittel |
| 4,0 | PU Verdicker |
| 2,0 | Entschäumer |
| | |
| ∑ 1000 | |

2a) Pigment Titandioxid 120g
2b) Pigment Titandioxid 60g, Aluminiumorthophosphat Dihydrat 60g
2c) Pigment Titandioxid 60g, Aluminiumphosphat amorph 60g

### 3) Außenfarbe Standartrezeptur

| **Menge in g** | **Substanz** |
|---|---|
| 197,0 | Wasser |
| 3,0 | Celluloseether |
| 1,0 | Phosphat Dispergiermittel |
| 1,0 | KOH |
| 3,0 | Acrylat Dispergiermittel |
| 220,0 | natürliches CaCO₃ (5µm) |
| 180,0 | Pigment |
| 300,0 | Styrolacrylat Dispersion |
| 2,0 | Entschäumer |
| 40,0 | Talkum |
| 30,0 | Kaolin |
| 15,0 | Testbenzin |
| 2,0 | Topfkonservierungsmittel |
| 2,0 | Filmkonservierungsmittel |
| 2,0 | Entschäumer |
| 2,0 | PU Verdicker |
| | |
| ∑ 1000,0 | |

3a) Pigment Titandioxid 180g
3b) Pigment Titandioxid 90g, Aluminiumorthophosphat Dihydrat 90g
3c) Pigment Titandioxid 90g, Aluminiumphosphat amorph 90g

### 4) Lagerstabilität

Die Lagerstabilität wurde durch Viskositätsmessungen ermittelt. Für den Test wurden die Anstrichmittel vier Wochen bei 50°C gelagert. Die Viskosität wurde am Tage direkt nach der Herstellung und dann wöchentlich gemessen. Es zeigte sich, dass die Farben welche das amorphe Aluminiumorthophosphat enthalten entweder eine hohe Anfangsviskosität aufweisen oder schon nach einer Woche so fest wurden, dass eine Viskositätsmessung nicht mehr möglich waren. Die Anstrichmittel, die Aluminiumorthophosphat Dihydrat enthalten zeigten während der gesamten Versuchsdauer eine gleichbleibende Viskosität.

| **Farbe** | **Viskosität mPa/s erster Tag** | **Viskosität mPa/s nach 4 Wochen** |
|---|---|---|
| 1a) Pigment Titandioxid 80g | 34000 | 83000 |
| 1b) Pigment Titandioxid 40g, Aluminiumorthophosphat Dihydrat 20g | 14700 | 14050 |
| 1c) Pigment Titandioxid 40g , Aluminiumphosphat amorph 10g | 40400 | 45800 |
| 1d) Pigment Titandioxid 40g , Aluminiumphosphat amorph 20g | 69200 | 68200 |
| 1e) Pigment Titandioxid 60g | 19200 | 19700 |
| 1f) Pigment Aluminiumorthophosphat Dihydrat 60g | 17200 | 17150 |
| 1g) Pigment Aluminiumorthophosphat amorph 60g | Wurde wärend der Herstellung fest | |
| 2a) Pigment Titandioxid 120g | 18150 | 16200 |
| 2b) Pigment Titandioxid 60g, Aluminiumorthophosphat Dihydrat 60g | 27700 | 30300 |
| 2c) Pigment Titandioxid 60g, Aluminiumphosphat amorph 60g | 26000 | Wurde nach einer Woche fest |
| 3a) Pigment Titandioxid 180g | 12450 | 13200 |
| 3b) Pigment Titandioxid 90g, Aluminiumorthophosphat Dihydrat 90g | 31100 | 30200 |
| 3c) Pigment Titandioxid 90g, Aluminiumphosphat amorph 90g | 34450 | Wurde nach einer Woche fest |

### 5) Weißgradvergleich

Der Weißgrad der verschiedenen Rezepturen wurde ermittelt, in dem mittels eines Rakel eine 300µm dicke Farbschicht auf eine schwarze PVC-Folie appliziert wurde. Nach einer Trocknungsdauer von 5 Tagen misst man das durch diffuse Beleuchtung reflektierte Licht in einem Winkel von 0° (Minolta, Chromameter CR-200).

| **Farbe** | **Y (Hellbezugswert des CIE-Farbsysthems)** |
|---|---|
| 1a) Pigment Titandioxid 80g | 90,8 |
| 1 b) Pigment Titandioxid 40g, Aluminiumorthophosphat Dihydrat 20g | 89,3 |
| 1c) Pigment Titandioxid 40g , Aluminiumphosphat amorph 10g | 86,6 |
| 1d) Pigment Titandioxid 40g , Aluminiumphosphat amorph 20g | 89,1 |
| 1e) Pigment Titandioxid 60g | 89,2 |
| 1f) Pigment Aluminiumorthophosphat Dihydrat 60g | 87,8 |
| 1g) Pigment Aluminiumorthophosphat amorph 60g | Zu fest zum auftragen |
| 2a) Pigment Titandioxid 120g | 87,7 |
| 2b) Pigment Titandioxid 60g, Aluminiumorthophosphat Dihydrat 60g | 84,5 |
| 2c) Pigment Titandioxid 60g, Aluminiumphosphat amorph 60g | 88,1 |
| 3a) Pigment Titandioxid 180g | 87,7 |
| 3b) Pigment Titandioxid 90g, Aluminiumorthophosphat Dihydrat 90g | 82,9 |
| 3c) Pigment Titandioxid 90g, Aluminiumphosphat amorph 90g | 86,7 |

### 6) Scheuerverlust

Der Scheuerverlust (Abriebfestigkeit) wurde gemäß DIN E Norm 13 300 bestimmt. Hierfür wurden von den verschiedenen Rezepturen mittels eines Rakel 300µm dicke Farbschicht auf eine schwarze PVC-Folie appliziert. Nach einer Trockenzeit von 4 Wochen wurde die beschichtete Probenfolie gewogen und in einem Scheuerprüfgerät 200 Scheuerzyklen unterworfen. Die Probe wurde dann gewaschen, getrocknet und erneut gewogen. Es wurde der Masseverlust bestimmt, aus dem der mittlere Schichtdickenverlust berechnet wurde.

| **Farbe** | **Scheuerverlust [µm]** |
|---|---|
| 1a) Pigment Titandioxid 80g | 58 |
| 1b) Pigment Titandioxid 40g, Aluminiumorthophosphat Dihydrat 20g | 40 |
| 1 c) Pigment Titandioxid 40g , Aluminiumphosphat amorph 10g | 76 |
| 1d) Pigment Titandioxid 40g , Aluminiumphosphat amorph 20g | 84 |

Die vorstehenden Beispiele zeigen, dass Titandioxid in Anstrichmitteln durch das erfindungsgemäße Aluminiumorthophosphat Dihydrat ersetzt werden kann, wobei der Weißgrad etwas geringer ist. Selbst wenn 50% Titandioxids durch nur 25% des Aluminiumorthophosphat Dihydrats erstezt werden verringert sich der Weißgrad nur minimal. Der Weißgrad der Anstrichmittel ist vergleichbar mit den Rezepturen in denen das Titandioxid durch das Aluminiumphosphat amorph ersetz wurde. Allerdings ist bei Verwendung des Aluminiumphosphat amorph aufgrund der hohen Ölzahl ein Austausch gleicher Mengen nicht möglich, da die Farbe nicht beständig ist und schon während der Herstellung oder nach einer Woche fest wird.

Überraschenderweise ist die Scheuerbeständigkeit gegenüber allen Vergleichsrezepturen erheblich gesteigert. Dies könnte an einer geringeren Ölzahl des Aluminiumorthophosphat Dihydrats liegen. Hierdurch wird der Bindemittelbedarf geringer, was zu einer erhöhten Scheuerbeständigkeit gegenüber Farben die Titandioxid enthalten, führt.

## Patentansprüche

1. Weißpigment für Anstrichmittel bestehend aus kristallinem Aluminiumorthophosphat Dihydrat.

2. Weißpigment gemäß Anspruch 1, **dadurch gekennzeichnet, dass** das Aluminiumorthophosphat eine Korngröße D₅₀ von 1 - 15 µm und D₉₀ von 1 - 30 µm aufweist.

3. Weißpigment gemäß Anspruch 1, **dadurch gekennzeichnet, dass** das Aluminiumorthophosphat ein Schüttgewicht von 300 bis 1000 g/l aufweist.

4. Weißpigment gemäß einem der Ansprüche 1-3, **dadurch gekennzeichnet, dass** es in wässrigen und lösemittelhaltigen Anstrichmitteln für den Innen - und/oder Außenbereich eingesetzt wird.

5. Verwendung von Aluminiumorthophosphat Dihydrat nach Anspruch 1 als Weißpigment in wässrigen Dispersionsfarben für den Innen- und/oder Außenbereich in Kombination mit anderen Weißpigmenten, insbesondere Titandioxid.

6. Herstellung von Weißpigmenten gemäß einem der Ansprüche 1 bis 3 umfassend die Schritte:
a) Umsetzung eines Aluminiumsalzes und/oder Aluminiumhydroxid mit Phosphorsäure und/oder einem Phosphat in wässriger Phase bei Temperaturen von 80-120°C
b) Fällung des Aluminiumorthophosphats als Dihydrat in kristalliner Form
c) Abfiltrieren des Aluminiumorthophosphats und
d) Trocknen des Aluminiumorthophosphats.

7. Verfahren gemäß Anspruch 7, **dadurch gekennzeichnet, dass** das Aluminiumorthophosphat in einem Schritt f) auf eine Korngröße D₅₀ =15 µm und D₉₀ = 30 µm gemahlen und/oder gesiebt wird.

8. Verfahren gemäß einem der Ansprüche 6 bis 7, **dadurch gekennzeichnet, dass** Aluminiumhydroxid mit Phosphorsäure umgesetzt wird.

9. Verfahren gemäß einem der Ansprüche 6 bis 7, **dadurch gekennzeichnet, dass** das Aluminiumsalz ein Aluminiumsulfat ist und mit Natriumphosphat umgesetzt wird.

## Claims

1. A white pigment for paint consisting of crystalline aluminium orthophosphate dihydrate.

2. A white pigment as per claim 1 **characterised by** the fact that the aluminium orthophosphate has a particle size D₅₀ of 1-15 µm and D₉₀ of 1-30 µm.

3. A white pigment as per claim 1 **characterised by** the fact that the aluminium orthophosphate has a bulk density of 300-1,000 g/l.

4. A white pigment as per one of the claims 1-3 **characterised by** the fact that it is used in paints that are aqueous and contain solvents for inside and/or outside.

5. Utilisation of aluminium orthophosphate dihydrate according to claim 1 as a white pigment in aqueous latex paints for inside and/or outside in combination with other white pigments, in particular titanium dioxide.

6. Production of white pigments as per one of the claims 1-3 including the steps:
a) converting an aluminium salt and/or aluminium hydroxide with phosphoric acid and/or a phosphate in the aqueous phase at temperatures of 80°-120° C
b) precipitating the aluminium orthophosphate as a dihydrate in crystalline form
c) filtering off the aluminium orthophosphate, and
d) drying out the aluminium orthophosphate.

7. Process as per claim 6 **characterised by** the fact that the aluminium orthophosphate is ground and/or screened in one step to a particle size of D₅₀ = 15 µm and D₉₀ = 30 µm

8. Process as per one of the claims 6-7 **characterised by** the fact that aluminium hydroxide is converted with phosphoric acid.

9. Process as per one of the claims 6-7 **characterised by** the fact that the aluminium salt is an aluminium sulphate and is converted with sodium phosphate.

## Revendications

1. Pigment blanc pour peinture composé de dihydrate d'orthophosphate d'aluminium cristallin.

2. Pigment blanc selon la revendication 1, **caractérisé en ce que** l'orthophosphate d'aluminium présente une taille de particules D₅₀ de 1 - 15 µg et D₉₀ de 1 - 30 µg.

3. Pigment blanc selon la revendication 1, **caractérisé en ce que** l'orthophosphate d'aluminium présente une densité apparente de 300 à 1000 g/l.

4. Pigment blanc selon la revendication 1 à 3, **caractérisé e**n ce qu'il est utilisé dans des peintures aqueuses et contenant des solvants prévues pour l'intérieur et/ou l'extérieur.

5. Utilisation de dihydrate d'orthophosphate d'aluminium selon la revendication 1 comme pigment blanc dans des peintures de dispersion aqueuses pour l'intérieur et/ou l'extérieur en combinaison avec d'autres pigments blancs, en particulier le dioxyde de titane.

6. Fabrication de pigments blancs selon l'une des revendications 1 à 3 comprenant les étapes :
a) Réaction d'un sel d'aluminium et/ou d'un hydroxyde d'aluminium avec de l'acide phosphorique et/ou un phosphate en phase aqueuse sous des températures de 80 à 120 °C.
b) Précipitation de l'orthophosphate d'aluminium sous la forme d'un dihydrate de forme cristalline.
c) Filtration de l'orthophosphate d'aluminium et
d) Séchage de l'orthophosphate d'aluminium

7. Procédé selon la revendication 6, **caractérisé en ce que** l'orthophosphate d'aluminium est, lors d'une étape, moulu et/ou tamisé jusqu'à une taille de particules D₅₀ = 15 µg et D₉₀ = 30 µg.

8. Procédé selon l'une des revendications 6 à 7, **caractérisé en ce que** l'hydroxyde d'aluminium réagit avec de l'acide phosphorique.

9. Procédé selon l'une des revendications 6 à 7, **caractérisé en ce que** le sel d'aluminium est un sulfate d'aluminium et réagit avec du phosphate de sodium.
